(19) Europäisches Patentamt
European Patent Office
Office européen des brevets

(11) **EP 1 355 804 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **01273448.9**

(22) Anmeldetag: **19.12.2001**

(51) Int Cl.:
*B60T 8/36* (2006.01)     *G01R 19/165* (2006.01)

(86) Internationale Anmeldenummer:
**PCT/EP2001/015040**

(87) Internationale Veröffentlichungsnummer:
**WO 2002/058967 (01.08.2002 Gazette 2002/31)**

(54) **SCHALTUNGSANORDNUNG UND VERFAHREN ZUR MESSUNG DES STROMS IN KRAFTFAHRZEUGBREMSSYSTEMEN**

CIRCUIT ARRANGEMENT AND METHOD FOR MEASURING CURRENT IN VEHICLE BRAKING SYSTEMS

CIRCUITERIE ET PROCEDE POUR LA MESURE DU COURANT DANS DES SYSTEMES DE FREINAGE DE VEHICULES AUTOMOBILES

(84) Benannte Vertragsstaaten:
**DE FR IT**

(30) Priorität: **23.01.2001 DE 10102947**

(43) Veröffentlichungstag der Anmeldung:
**29.10.2003 Patentblatt 2003/44**

(73) Patentinhaber: **Continental Teves AG & Co. oHG
60488 Frankfurt (DE)**

(72) Erfinder:
• **ENGELMANN, Mario
61449 Steinbach/Ts. (DE)**
• **FEY, Wolfgang
65527 Niedernhausen (DE)**
• **OEHLER, Peter
65929 Frankfurt-Höchst (DE)**

(56) Entgegenhaltungen:
| | |
|---|---|
| EP-A- 0 095 041 | EP-A- 0 242 640 |
| EP-A- 0 315 597 | DE-A- 3 842 921 |
| DE-A1- 10 041 958 | US-A- 5 539 320 |
| US-A- 5 625 299 | US-A- 5 861 683 |

**Beschreibung**

Die Erfindung betrifft eine Stromregelschaltung gemäß Oberbegriff von Anspruch 1, ein Verfahren gemäß Oberbegriff von Anspruch 5 und die Verwendung der erfindungsgemäßen Stromregelschaltung in Bremskraft- oder Fahrdynamikreglern für Kraftfahrzeuge.

Elektronische Steuergeräte für Kraftfahrzeugbremsanlagen führen in zunehmendem Maße Funktionen aus, die entweder zur Fahrsicherheit beitragen oder neuerdings sogar grundlegende Fahrzeugfunktionen, wie.die Bremsfunktion als solches, umfassen. Beispiele für Funktionen zur Verbesserung der Fahrsicherheit sind die Blockierschutzregelung (ABS) oder die Fahrdynamikregelung (ESP: Elektronisches Stabilitäts-Programm). Die Bremsfunktion als solches wird in neueren elektronischen Bremssystemen, wie der Elektrohydraulischen Bremse (EHB) oder der Elektromechanischen Bremse (EMB), ebenfalls durch das elektronische Steuergerät der Bremse übernommen. Es werden daher immer größere Anforderungen an die Zuverlässigkeit, Fehlertoleranz und die Fehlerbehandlung der elektronischen Steuergeräte gestellt.

Es ist bekannt, in elektronischen Steuergeräten für Kraftfahrzeugbremssysteme Sicherheitseinrichtungen vorzusehen, mit denen auftretende Defekte der darin enthaltenen elektronischen Bauelemente erkannt werden können. Bei Erkennung eines solchen Defekts können geeignete Gegenmaßnahmen, wie beispielsweise die Abschaltung des Steuergeräts oder die Umschaltung des Steuergeräts in einen Notfallmodus, vorgenommen werden. Zur Erkennung von Defekten können sicherheitsrelevante Schaltungsteile doppelt oder mehrfach (redundant) ausgeführt sein. Durch Vergleich der Funktion der mehrfach vorhandenen Schaltungsteile können auftretende Fehler in vielen Fällen erkannt werden.

In elektronischen Reglern werden Halbleiterbauelemente, wie Leistungsfeldeffekttransistoren (Power-MOSFETs, FETs), unter anderem zur Ansteuerung der elektromechanischen Hydraulikventile, die zur Regelung des Bremsdrucks vorgesehen sind, eingesetzt. Eine Regelung des hydraulischen Drucks kann hierbei mittels einer pulsweitenmodulierten Treiberstufe, welche in der Regel zumindest eines der oben genannten Halbleiterbauelemente umfaßt, erfolgen (PWM-Regelung).

Bei einer pulsweitenmodulierten Regelung eines Stromes, die einen digitalen Regler verwendet, muß der Strom über einen Analog/Digital-Wandler (A/D-Wandler) zu ganz-bestimmten Zeiten gemessen werden. Will man mehrere solcher pulsweitenmodulierten Treiber gleichzeitig betreiben, so wird man einen A/D-Wandler pro pulsweitenmodulierter Stufe vorsehen. Diese Vorgehensweise ist zum Beispiel deshalb naohteilhaft, da sie aufwendig zu realisieren ist, wodurch insbesondere in der Massenfertigung hohe Kosten entstehen, und da ein A/D-Wandler nur für kurze Zeit, meist nur einen Bruchteil der zur Verfügung stehenden Zeit, benötigt wird. Zum Beispiel bei einer Dauer einer A/D-Wandlung von 5 $\mu$s und einer Frequenz der Pulsweitenmodulation von 4 kHz wäre der A/D-Wandler lediglich zu 2 % ausgelastet.

Die Erfindung setzt sich zum Ziel, diese Nachteile zu überwinden.

Nach der Erfindung wird die Stromregelschaltung gemäß Anspruch 1 vorgeschlagen.

Gemäß der Erfindung erfolgt bevorzugt die Messung der Stromwerte mehrerer pulsweitenmodulierter Treiberstufen mittels einer gegenüber der Anzahl der pulsweitenmodulierten Treiberstufen verringerten Anzahl von Strommesseinrichtungen zur individuellen Regelung des Laststroms.

Die Treiberstufen, welche bevorzugt zur Ansteuerung induktiver Lasten, wie Spulen, vorgesehen sind, können ein oder mehrere Halbleiterschaltelemente, wie Feldeffekttransistoren (FETs), Sense-FETs etc., umfassen. Bei den Lasten handelt es sich besonders bevorzugt um Ventilspulen von elektromagnetischen Betätigungsventilen für hydraulische Bremsanlagen.

Bei der Strommeßeinrichtung handelt es sich bevorzugt im wesentlichen um einen A/D-Wandler. Bevorzugt wird genau ein A/D-Wandler für mehrere pulsweitenmodulierte Stufen verwendet. Es ist möglich, daß der A/D-Wandler auch weitere zu wandelnde Kanäle verarbeitet, wenn diese nicht zeitkritisch sind.

Es hat sich gezeigt, daß die Reihenfolge und/oder der Zeitpunkt der Strommessung für die einzelnen pulsweitenmodulierten Stufen durch die erfindungsgemäße Schaltungsanordnung organisiert werden muß. Hierbei muß sichergestellt sein, daß keine Strommessung ausgelassen wird, was zu einer instabilen Regelung führen kann, und daß Ungenauigkeiten, welche durch die Organisation hervorgerufen werden können, nur zu einem möglichst geringen Maße zu Meßfehlern bei der Strommessung führen.

Im Dokument DE3842921A1 wird eine Schattungsanordnung zur Stromüberwachung elektrischer Verbraucher vorgeschlagen, mit der durch kostengünstige Bauteile eine verzögerungsfreie Stromüberwachung durch Vergleich mit einem dem zulässigen Stromverlauf angepassten, vorgegebenen Grenzwert erfolgt. Zu diesem Zweck wird das Messsignal des Strommessgliedes auf einen Eingang eines Komparators gelegt, dessen anderer Eingang am Ausgang eines DIA-Wandlers angeschlossen ist, der eingangsseitig über eine Busleitung mit einem Ausgang eines Mikrorechners verbunden ist. Über diesen Ausgang wird jeweils beim Einschalten eines der zu überwachenden Verbraucher ein diesem zugeordneter, zeitlich abgestuft gesteuerter Grenzwert über den Wandler auf den damit verbundenen Komparatoreingang gelegt und bei Abweichung des augenblicklichen Verbraucherstromes vom augenblicklichen Grenzwert um einen vorgegebenen Betrag tritt am Ausgang des Komparators ein Störsignal auf DE3842921 offenbart keine Schaltung, welche eine Pulseweitenmodulation (PWM) durchführt. Das Dokument offenbart keine Einrichtung zur Messung eines Stroms, im Gegensatz zur Erfindung.

Das Dokument DE10041958 A1 zeigt eine Steuerschaltung für ein elektromagnetisches Ventil. Die Steuerschaltung weist ein elektromagnetisches Solenoid it einem Halbleiterschaltelement und einer Schutzdiode auf und enthält einen Stromspannungswandler, ein Tiefpassfilter, einen Fehlerverstärker, einen Chopperwcllengenerator, einen PWM-Komparator und eine Halbleiterschaltelementtreiberschaltung. Die Steuerschaltung weist weiter eine Einrichtung zum Addieren einer Spannung gleich einer Ausgangsspannung des Stromspannungswandlers, die durch Wandeln eines Stromes, der zu dem elektromagnetischen Solenoid über die Schutzdiode fließt, wenn der Rechteckimpulsstrom, der von der Gleichstromquelle zu dem elektromagnetischen Ventil fließt, ausgeschaltet ist, in eine Spannung durch den Stromspannungswandler bestimmt wird, zu der Rechteckimpulsspannung, die eine Ausgabe des Stromspannungswandlers ist, aufweist. Bei dieser Steuerschaltung kann der mittlere Strom des Nicht-Rechteckimpulsstromes, der in das elektromagnetische Solenoid fließt, genau gesteuert werden durch Steuern der extern eingegebenen variablen Spannung, und der Betrieb des elektromagnetischen Ventils kann genau gesteuert werden. Das Dokument offenbart keinen Multiplexer.

Die Funktionsweise eines bevorzugt in der Treiberstufe einsetzbaren Sense-FETs geht beispielsweise aus dem US-Patent Nr. 5,079,456 oder der Deutschen Patentanmeldung DE 195 20 735 A1 hervor. Demnach kann der Laststrom eines Leistungs-FETs dadurch erfaßt werden, daß dem Leistungs-FET auf dem Halbleitermaterial in unmittelbarer Nähe ein ähnlicher, von der Fläche her kleinerer FET, parallel geschaltet wird. Der durch den kleineren FET fließende Strom ist zum Laststrom des Leistungs-FETs weitestgehend proportional, jedoch ist der Strom um ein strukturell festgelegtes Zahlenverhältnis kleiner als der Laststrom, welches dem Verhältnis an verbrauchter Chipfläche zwischen Leistungs-FET und Sense-FET im wesentlichen entspricht.

Zur Organisation der Strommessungen ist in der Schaltungsanordnung eine Kontrolleinrichtung vorgesehen. Die Kontrolleinrichtung steuert die Zuordnung des Eingangs des A/D-Wandlers zu den Strommeßeinrichtungen der Treiberstufen auf Anforderung.

Die erfindungsgemäße Schaltungsanordnung stellt bevorzugt eine bauliche Einheit, insbesondere ein Halbleiter-Substrat, dar, auf der die Strommeßeinrichtung, die Einrichtung zur Reduzierung der Meßkanäle, die Endstufen und der A/D-Wandler zusammengefaßt sind.

Die Erfindung betrifft auch ein Verfahren gemäß Anspruch 5.

Nach der Erfindung wird der Zeitpunkt der Strommessungen durch eine organisierte zeitliche Abfolge gesteuert.

Bevorzugt erfolgt die Organisation nach einer ersten bevorzugten Ausführungsform so, daß in einer vorgegebenen Reihenfolge jede Treiberstufe in einer zeitlichen Abfolge abwechselnd eine ausschließliche höchste Priorität zugeordnet bekommt.

Die Handhabung der Anforderung erfolgt je nach Situation insbesondere gemäß nachfolgenden Schritten:

A) Durch den A/D-Wandler wird zuerst immer die Anforderung der Treiberstufe mit der momentan höchsten Priorität bearbeit.

B) Nachdem Schritt A) beendet ist, wird geprüft, ob in einem Speicher (z.B. eine Warteschlange) weitere unbearbeitete Anforderungen vorhanden sind.

C) Wenn die Prüfung in Schritt B) positiv ausfällt, wird eine der gespeicherten Anforderungen bearbeitet.

D) Gegebenenfalls kann, wenn die Prüfung in Schritt B) negativ ausfällt, eine Anforderung zur A/D-Wandlung durchgeführt werden, welche nicht von einer Treiberstufe stammt.

Gemäß der ersten bevorzugten Ausführungsform ist der Speicher als Warteschlange organisiert, so daß immer eine früher eingegangene Anforderung vor einer später eingegangenen bearbeitet wird (First-Come-First-Serve).

Gemäß einer zweiten bevorzugten Ausführungsform zur Organisation der Strommessungen wird der Speicherinhalt nach einer Reihenfolge abgearbeitet, die berücksichtigt, wieviel Zeit zur Bearbeitung einer individuellen Anforderung noch zur Verfügung steht. Hierdurch wird unter anderem der Tatsache Rechnung getragen, daß in der Regel die mögliche Meßzeit durch eine endliche Länge der Ansteuerimpulse begrenzt ist. Demzufolge wird die Bearbeitung von gespeicherten Anforderungen nach dieser Ausführungsform in einer Reihenfolge vorgenommen, die den Zeitpunkt der Endflanke der Ansteuerimpulse berücksichtigt. Hierzu werden insbesondere die Anforderungen von Treiberstufen in der Reihenfolge ihrer Werte für den aktuellen duty cycle (dc) sortiert und gemäß dieser Reihenfolge abgearbeitet. Es ist ganz besonders bevorzugt, wenn dabei die Sortierung nach einer Reihenfolge erfolgt, nach der immer die Anforderung mit dem kleinsten Wert für den duty cycle zuerst bearbeitet wird. Durch Oganisation der Strommessungen nach der hier beschriebenen Ausführungsform kann vorteilhafterweise der weiter oben angegebene Schritt entfallen, nach dem der Stufe mit der aktuellen Zeitscheibe immer die höchste Priorität zugeteilt wird.

Wie bereits gesagt, kann, wenn der Speicher leer ist und noch ausreichend Zeit innerhalb der momentanen Zeitscheibe zur Verfügung steht, eine Anforderung zur A/D-Wandlung bearbeitet werden, welche nicht von den Treiberstufen stammt. Es kann außerdem zweckmäßig sein, daß die verbleibende Zeit zur Abarbeitung der A/D-Kanäle in einer vorgegebenen Reihenfolge genutzt wird.

Die Schaltungsanordnung nach der Erfindung läßt sich besonders vorteilhaft in elektronischen Steuergeräten für Kraftfahrzeugbrems- und Regelsysteme verwenden, insbesondere in sogenannten integrierten Bremssystemen, bei denen elektronisches Steuergerät (ECU) mit einer hydraulischen Steuervorrichtung (Ventilblock, HCU) zu einem monolithischen Block zusammengefaßt sind.

Im folgenden werden die Anforderungen an eine Strommeßeinrichtung zur Strommessung an mehreren pulsweitenmödulierten Treiberstufen näher beschrieben.

Weitere bevorzugte Ausführungsformen der Erfindung ergeben sich aus den Unteransprüchen und der nachfolgenden Figurenbeschreibung, die ein Ausführungsbeispiel für die Erfindung enthält.

Es zeigen

Fig. 1    den Signalverlauf für eine pulsweitenmodulierte Regelung im eingeschwungenen Zustand,

Fig. 2    Schaltbilder für Strommeßeinrichtungen zur Strommessung bei einem Low-Side-Treiber,

Fig. 3    eine erfindungsgemäße Schaltungsanordnung mit einem A/D-Wandler, pulsweitenmoduliert angesteuerten Stufen und zusätzlichen A/D-Wandler-Kanälen und

Fig. 4    ein Diagramm mit unterschiedlichen Signalverläufen in der Schaltungsanordnung gemäß Fig. 3.

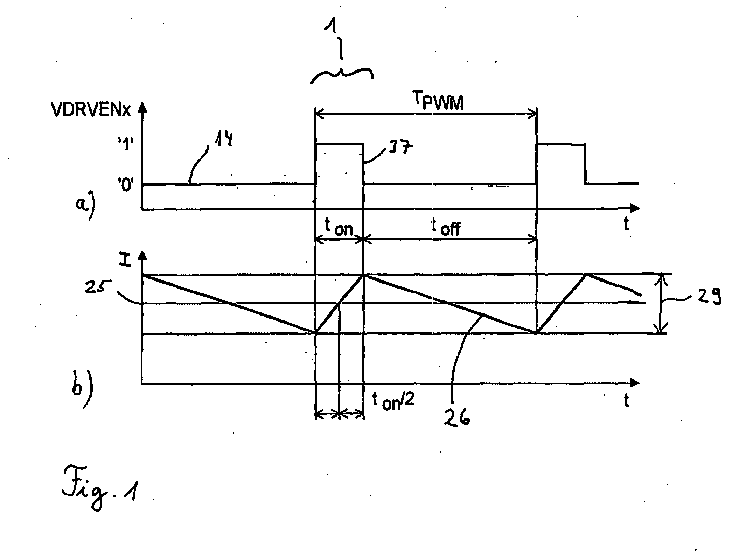

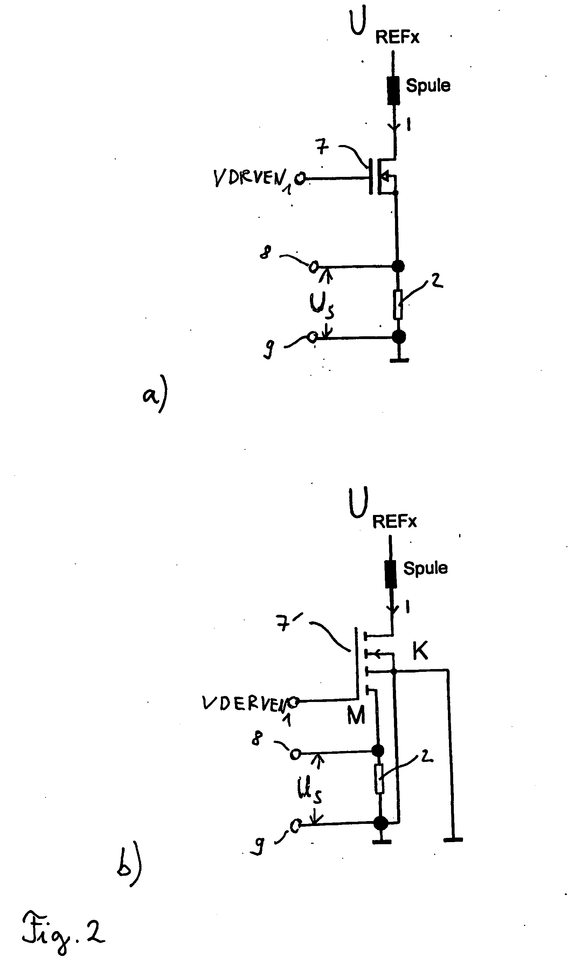

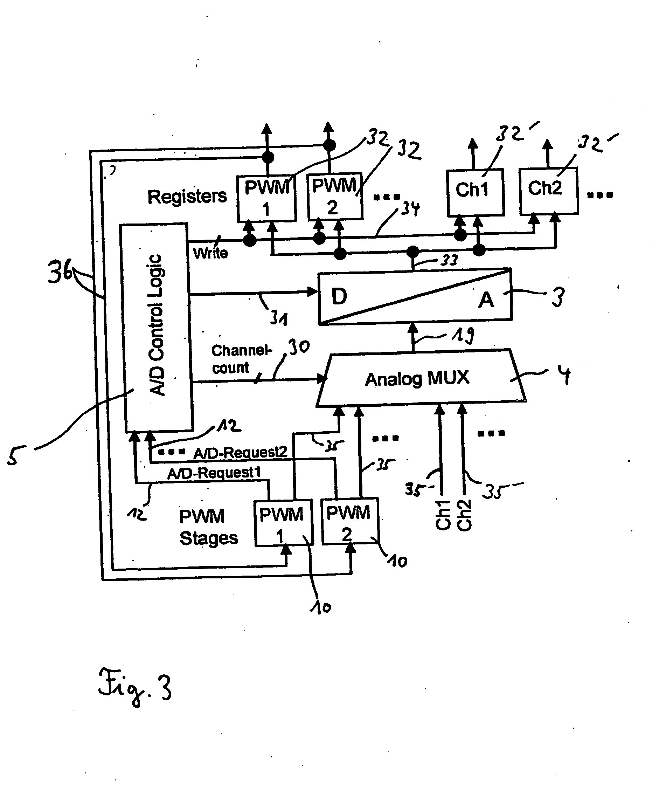

Die Erläuterung der Funktionsweise der erfindungsgemäßen Schaltungsanordnung in Fig. 3 erfolgt zunächst unter Bezugnahme auf Fig. 1. Die Einstellung des Stromes I (Teilbild b), Bezugszeichen 26, in einer induktiven Last, z.B. Spule eines Ventils oder eines Motors, erfolgt mittels pulsweitenmodulierter Ansteuerung eines FETs 7 (Fig. 2). Durch Stromrückkopplung wird der Laststrom geregelt. Teilbild a) gibt den Verlauf eines Ansteuersignals 14 für eine Treiberstufe wieder. Der Ansteuerimpuls 37 ist rechteckförmig. Die Dauer einer Ansteuerperiode $T_{PWM}$, welche in allen Treiberstufen gleich ist (gemeinsame Periode), setzt sich aus der Zeit $t_{ON}$ (Bezugszeichen 1) und $t_{OFF}$ zusammen, so daß gilt: $T_{PWM} = t_{ON} + t_{OFF}$. Der duty cycle ist definiert als $dc = t_{ON} / T_{PWM}$. Während $t_{ON}$ wird die Last angesteuert, während $T_{OFF}$ ist der Ansteuertransistor gesperrt und es fließt ein Rezirkulationsstrom über einen hierzu vorgesehenen Strompfad, welcher durch eine Diode oder eine aktive Schaltung gebildet wird. Bei gegebenem Wert von dc ergeben sich für die Anschaltdauer des Steuertransistors: $t_{on} = dc * T_{PWM}$. Die Rezirkulationszeit berechnet sich zu $t_{off} = (1 - dc) * T_{PWM}$. Der Verlauf der Kurven in Fig. I ist idealisiert dargestellt. Der Strom durch die Spule verhält sich näherungsweise linear, wenn die Zeitkonstante $\tau$ der Spule groß ist gegenüber der Periode $T_{PWM}$. Teilbild b) zeigt, daß der Spulenstrom zu einem Zeitpunkt gemessen werden sollte, der vor der Endflanke 37 des Ansteuerimpulses 37 liegt. Der Mittelwert des Spulenstroms läßt sich besonders vorteilhaft bestimmen, wenn eine Strommessung möglichst genau zum Zeitpunkt $t_{ON} / 2$ erfolgt.

In Fig. 2 ist ein Beispiel für eine Treiberstufe zum Ansteuern einer induktiven Last dargestellt. Die Ansteuerung der Last kann über einen Low-Side-Treiber oder einen High-side-Treiber (nicht dargestellt) erfolgen. In Teilbild a) ist im Hauptpfad von Main-FET 7 ein Meßwiderstand 2 angeordnet, an dem die stromproportionale Spannung $U_S$ an Klemmen 8 und 9 abgegriffen werden kann. In Teilbild b) wird der Strom über einen getrennten Strompfad eines Sense-FETs 7' zur Strommessung herangezogen.

Die Messung des Spulenstroms erfolgt zweckmäßigerweise bei eingeschaltetem Treiber, d.h. während der Zeit $t_{on}$, insbesondere zu einem Zeitpunkt, der möglichst genau in der Nähe der halben Einschaltzeit $t_{on} / 2$ liegt. Dies hat den Vorteil, daß der zu diesem Zeitpunkt ermittelte Stromwert näherungsweise dem Mittelwert 25 des Spulenstroms entspricht. Alternativ ist es möglich, den Spulenstrom auch während der Rezirkulationszeit $t_{OFF}$ über einen Rezirkulationstreiber, z.B. etwa zum Zeitpunkt $t_{OFF} / 2$ zu bestimmen. '

Fig. 3 erläutert ein Beispiel für eine Schaltungsanordnung gemäß der Erfindung, nach dem zur Strommessung genau ein A/D-Wandler verwendet wird. Die Anordnung umfaßt mehrere pulsweitenmoduliert angesteuerte Treiberstufen 10, sowie eine bestimmte Anzahl zusätzlicher A/D-Wandler-Kanäle 35 und 35' und einen A/D-Wandler 3 mit vorgeschaltetem AnalogMultiplexer 4. Ansteuerlogik 5 ist mit den Treiberstufen 10 verbunden, von denen diese Anforderungssignale über Signalleitungen 12 empfängt. Über Leitung 31, steuert Logik 5 den A/D-Wandler. Leitung 30 dient zur Steuerung des Multiplexers 4. Über Eingang 19 werden dem A/D-Wandler analoge Signale zugeführt. Der digitale Ausgang des A/D-Wandlers 33 führt zu Speicherplätzen 32 und 32', welche die ermittelten Stromwerte oder gewandelte Werte der Kanäle 35, 35' (Ch1, Ch2) speichern. Logik 5 weist außerdem eine Schreibleitung 34 auf, mit,der der Zugriff von Digitalausgang 33 des A/D-Wandlers auf die Stromspeicherstellen 32,32' gesteuert wird (Demultiplexer). Von Speicherplätzen 32 mit Stromwerten der Treiberstufen sind Datenleitungen 36 zu den Treiberstufen 10 vorgesehen, welche digitalisierte Stromsignale übermitteln..

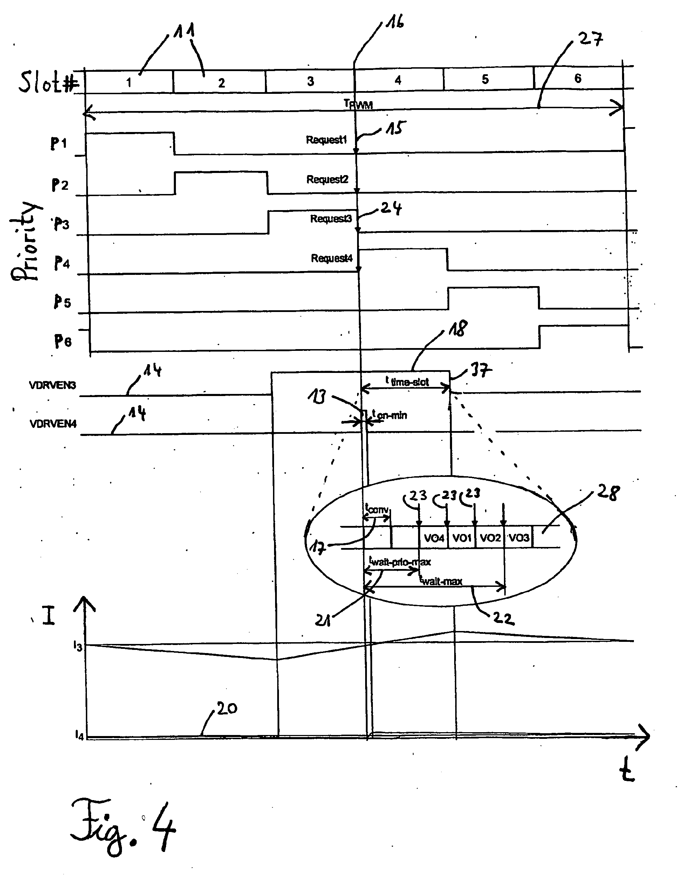

Bevorzugt wird die Periode $T_{PWM}$ vollständig in gleichlange Zeitscheiben 11 (siehe Fig. 4) unterteilt, wobei jeder Treiberstufe 10 eine der ermittelten Zeitscheiben zugeordnet wird. Die Anzahl der Treiberstufen wird mit k bezeichnet. Für die Breite einer Zeitscheibe $t_{time-slot}$ gilt dann $t_{time-slot}$ = (1 / k) * $T_{PWM}$. Hierdurch wird das Problem gelöst, daß bei gleichzeitigem Start aller Ansteuerimpulse bei einem kleinen Duty-Cycle dc die zur Strommessung zur Verfügung stehende Zeitspanne $t_{on}$ zu klein sein würde, um alle Strommessungen innerhalb der zur Verfügung stehenden Zeit zu bearbeiten.

Jede Treiberstufe wird zu Beginn ihrer Zeitscheibe eingeschaltet, so daß keine der Treiberstufen zur gleichen Zeit eingeschaltet werden. Dies schließt jedoch nicht aus, daß eine Treiberstufe länger als die entsprechende Zeitscheibe eingeschaltet sein kann, z.B. in der Weise, daß das Ansteuersignal des Treibers immer zu 100 % ausgesteuert ist. Eine Strommessung mittels des A/D-Wandlers findet dann statt, wenn eine Treiberstufe ein Anforderungssignal (Request) über die ihr zugeordnete Signalleitung 12 an den A/D-Wandler leitet, welcher die A/D-Wandlung nach Empfang eines Anforderungssignals entweder sofort oder zu einem späteren Zeitpunkt durchgeführt.

Bei der Behandlung der Anforderungssignale wird durch die Logik 5 so vorgegangen, daß die Treiberstufe zu einer Zeit, welche innerhalb der ihr zugeordnete Zeitscheibe liegt, oberste Priorität hat, also zuerst bearbeitet wird. Fig. 4 zeigt sechs Zeitscheiben 11 für die Treiberstufen Nr. 1 bis 6. Jeder Treiberstufe ist eines der Signale P1 bis P6 zugeordnet, wobei ausschließlich im Zeitraum einer zugeordneten Priorität das jeweilige Signal auf "high" gesetzt ist. Es kann besonders zur Bearbeitung von Signalen mit kleinem duty cycle sinnvoll sein, im vorstehend dargelegten Fall eine aktuell in Bearbeitung befindliche Anforderung (z.B. eine laufende A/D-Wandlung) sofort zu unterbrechen (Interrupt). Es ist aber auch möglich, wenn auf die Verarbeitung von Signalen mit besonders kleinem duty cycle verzichtet wird, zunächst die laufende Messung zu beenden und die Messung der Treiberstufe mit der momentanen Priorität unmittelbar darauffolgend zu bearbeiten.

Nach Ablauf der Zeitscheibe einer Treiberstufe verliert die entsprechende Stufe ihre Priorität. Wird von einer Treiberstufe, die keine Priorität hat dennoch ein Anforderungssignal erzeugt, wird die mit dem Anforderungssignal verbundene Anforderung an den A/D-Wandier von einer Kontrolleinrichtung 5 in eine Warteschlange (Queue) eingetragen. Diese Warteschlange wird dann abgearbeitet, wenn die Treiberstufe, welche momentan oberste Priorität hat, ihre Strommessung entweder beendet hat oder keine Strommessung erforderlich ist. Bei der Bearbeitung der Warteschlange wird die zuerst entgegengenommene Anforderung zuerst bearbeitet (First-Come-First-Serve). Wenn die Warteschlange vollständig durch Bearbeitung der Strommessanforderungen abgearbeitet ist, kann der A/D-Wandler zur Messung von anderen Signalen verwendet werden. So kann zum Beispiel ein kontinuierlicher Modus vorgesehen sein, in dem die weiteren Signalkanäle 35, 35', welche nicht PWM-Stufen zugeordnet sind, nach einer festgelegten Reihenfolge abgearbeitet werden.

Das vorstehend beschriebene Konzept zur Strommessung und Stromregelung weist bezüglich des kleinsten einstellbaren duty cycle (dc) eine untere Grenze ($t_{on-min}$) auf. Wenn de kleiner als $t_{on-min}$ ist, genügt die zur Verfügung stehende Zeit nicht mehr für eine Strommessung. Erfindungsgemäß ist daher bevorzugt, die untere Grenze für den duty cycle dadurch abzusenken, daß zumindest bei kleinen Werten von dc eine Strommessung durch jeweils ein Speicherglied pro Stufe vorgenommen wird, so daß der Stromwert der Stufe auch noch für einen längeren Zeitraum für die A/D-Wandlung zur Verfügung steht. Ein Speicherglied kann besonders einfach mittels eines Kondensators realisiert werden, welcher die zum Zeitpunkt des Auschaltens der Treiberstufe am Ausgang anliegende Spannung hält.

An Hand von Fig. 4 werden nachfolgend zwei Grenzfälle während des Betriebs der Schaltungsanordnung in Fig. 3 näher erläutert. Zeitintervall 27 ($T_{PWM}$) ist in sechs Zeitintervalle 11 unterteilt.

Extremfall 1

Endstufe Nr. 4 wird durch Signalpuls 13 (VDRVEN4) mit einem sehr kleinen Wert von dc (etwa 5 %) angesteuert, welcher gleichzeitig einen unteren Grenzwert für die beispielgemäße Schaltung darstellt. Die Breite des Signalimpulses ist mit $t_{on-min}$ bezeichnet. Die Meßzeit des A/D-Wandlers bzw. dessen Sample-Zeit muß nun so gewählt werden, daß innerhalb der Zeit $t_{on-min}$ zumindest eine A/D-Wandlung bzw. das Sampling des aktuellen Wertes beendet ist. Andernfall kann es zu einer Instabilität der Regelung kommen. Die Meßzeit des A/D-Wandlers läßt sich auf die weiter unten beschriebene Weise abschätzen.

Extremfall 2

Der zweite Fall behandelt die maximal mögliche Anzahl von gleichzeitig erzeugten Anforderungen. Wie nachfolgend gezeigt wird, sind bei sechs Zeitscheiben maximal drei Anforderungen ohne Priorität und eine Anforderung mit Priorität möglich. Gleichzeitige Anforderungen ohne Priorität erhält man dann, wenn Treiberstufe Nr. 1 mit einem dc von 100 % für die Dauer $t_{ON}$ = $T_{PWM}$, also für die maximal mögliche Zeit, angesteuert wird, Treiberstufe Nr. 2 mit einem dc von 2 / 3 * 100 % und Treiberstufe Nr. 3 mit einem dc von 1/3 * 100 % angesteuert wird. Eine Anforderung mit Priorität erzeugt nun das Signal 13 in Zeitscheibe 4, welches im Zusammenhang mit Extremfall 1 weiter oben bereits beschrieben wurde. Zur verbesserten Übersichtlichkeit sind in Fig. 4 nur die Ansteuersignal der Stufen Nr. 3 und 4, nicht aber die Signale der Stufen Nr. 1 und Nr. 2, eingezeichnet. Somit bezeichnen 18 und 13 die Ansteuersignale der 3. und 4. Stufe (VDRVEN 3 und 4). Im unteren Teil von Fig. 4 sind zusätzlich die Stromverläufe der Treiberstufen Nr. 3 und Nr. 4 qualitativ dargestellt ($I_3$ und $I_4$). Der Impulsbeginn von Ansteuersignal 13 wird, wie auch der Impulsbeginn der Ansteuersignale Nr. 1 (Anfangszeitpunkt beliebig), Nr. 2 und Nr. 3, so gewählt, daß $t_{on}$ / 2 auf Zeitpunkt 16 zu liegen kommt. Zum Zeitpunkt 16 wird dann z.B. durch Stufe Nr. 1 eine Strommeßanforderung (Pfeil 15) erzeugt, wobei diese Stufe ihre Priorität bereits verloren hat. Bei einer Anforderung durch Stufe Nr. 4, welche die Priorität hat, wird eine weitere Anforderung erzeugt. Somit liegen vier Anforderungen vor, die in der Reihenfolge 28 durch den A/D-Wandler abgearbeitet werden sollen. Nach Beendigung der Bearbeitung von Treiberstufe Nr. 4 (V04) ist nun die Warteschlange maximal mit drei (weiteren) Anforderungen (Vo1, V02, V03) gefüllt. Die Parameter der Schaltungsanordnung sind daher so auszulegen, daß die zu bearbeitenden Anforderungen noch innerhalb der vollen Zeitscheibe Nr. 4 bearbeitet werden können, da dann Treiberstufe Nr. 3 abgeschaltet wird.

Wie bereits gesagt, kann es, wenn eine Gesamttreiberanzahl von sechs zugrundegelegt wird, im Extremfall bei Ansteuerung aller Treiberstufen maximal zu vier zeitgleichen Änforderungen von Treiberstufen kommen. Dies schließt nicht aus, daß auch die gegebenenfalls ebenfalls angesteuerten Stufen Nr. 5 und 6 weitere Anforderungssignale erzeugen können. Allerdings folgt aus logischen Überlegungen, daß diese Anforderungen nicht zum Zeitpunkt 16, an dem die Anforderungen der Stufen Nr. 1 bis 4 zusammenfallen können, zu liegen kommen können und daher zum Zeitpunkt 16 in der Regel bereits bearbeitet sind bzw. erst noch erzeugt werden.

Abschätzung des Zeitbedarfs einer Strommessung

Zur Berechnung des Zeitbedarfs eines Meßvorgangs ist im wesentlichen der Zeitbedarf des A/D-Wandlers ($t_{conv}$) zu berücksichtigen, aber auch das Einschwingen der Meßschaltung fließt in die benötigte Einlesezeit ein, welche nachfolgend mit $t_{Sample}$ (Bezugszeichen 17 in Fig. 4) bezeichnet wird. Zur Verkürzung des Zeitbedarfs des A/D-Wandlers ist es besonders zweckmäßig solche A/D-Wandler einzusetzen, welche einen Meßwert zunächst einlesen und dann zwischenspeichern (sample and hold, Pipelining), so daß am Eingang bereits ein nachfolgender Wert eingelesen wird, während der aktuelle Wert sich noch in der Wandlung befindet. Eine weitere Zeitverzögerung bzw. Unsicherheit ergibt sich durch die getaktete Abtastung (Polling) des A/D-Wandlereingangs 19, symbolisiert durch die Pfeile 23. Normalerweise fallen die Abtastzeitpunkte durch die Taktung nicht mit den Zeitpunkten der Strommeßanforderuhgen genau zusammen. Hierdurch ergibt sich eine Zeitverzögerung, die nachfolgend mit $t_{Polling}$ bezeichnet wird. Die größte anzunehmen Abweichung ergibt sich, wenn eine Strommeßanforderung unmittelbar nach einer Polling-Abtastung erfolgt, so daß $t_{Polling}$ als Maximum den Wert $t_{conv}$ annehmen kann. Es gilt daher

$$t_{Polling-max} = t_{conv}.$$

Die maximale Wartezeit zwischen Anforderung und Abtasten der priorisierten Stufe (Extremfall 1, siehe Bezugszeichen 21) wird mit $t_{wait-prio-max}$ bezeichnet und errechnet sich zu

$$t_{wait-prio-max} = t_{Polling-max} + t_{sample} = 2 * t_{conv}.$$

Damit der Strom einer Treiberstufe noch rechtzeitig gemessen wird, ist zunächst zu fordern, daß der Vorgang des Abtastens durch den A/D-Wandler noch während des Zeitintervalls $t_{on}$ beendet ist. Es muß daher gelten:

$$t_{wait-prio-max} \leq t_{on-min},$$

wobei $t_{on-min}$ der kleinstmögliche Wert für $t_{on}$ ist.

Ein zur hier durchzuführenden Berechnung geeignetes Beispiel ist der bereits Eingangs erläuterte Extremfall 1 mit kleinem $t_{ON}$ (Impuls 13, Treiberstufe Nr. 4). Den hierdurch in der Last hervorgerufenen Strom zeigt Kurve 20. Die Stromanforderung erfolgt unmittelbar nach Zeitpunkt 16 zum Zeitpunkt $t_{ON}$ / 2.

Der zweite Extremfall, welcher am Beispiel von Treiberstufe Nr. 3 bereits erläutert wurde, legt eine weitere Grenzbedingung für den Zeitbedarf des A/D-Wandlers fest. Wie bereits gesagt, liegen in diesem Fall eine maximal mögliche Zahl von Anforderungen vor. Die maximale Wartezeit zwischen Anforderung und dessen Bearbeitung durch den A/D-Wandler, welche nachfolgend mit $t_{wait-max}$ bezeichnet wird, ist in der Figur durch Doppelpfeil 22 markiert. $t_{wait-max}$ berechnet sich demnach zu

$$t_{wait-max} = t_{Polling-max} + t_{sample} + 3 * t_{conv} = 5 * t_{conv}.$$

Allgemein formuliert ergibt sich der Ausdruck

$$t_{wait-max} = t_{Polling-max} + t_{sample} + \lfloor k/2 \rfloor * t_{conv}.$$

Als zweite Grenzbedingung muß nun gelten

$$t_{wait-max} \leq t_{time-slot}.$$

Durch die weiter oben beschriebene Unterbrechung einer laufenden Wandlung (Interrupt) kann $t_{wait-prio-max}$ um $1* tconv$ verringert werden. $t_{wait-max}$ ändert sich hierdurch nicht.

Der Rippel 29 (siehe Fig. 1) des Stromes im eingeschwungenen Zustand wird durch die Entladung der Spule während der $t_{off}$-Zeit bestimmt. Er hängt damit von der Zeitkonstanten der Entladung (und damit vom L der Spule) ab, sowie vom aktuellen Duty-Cycle. Aus dem Rippel kann der Stromanstieg während der $t_{on}$-Zeit ermittelt werden. Hieraus kann berechnet werden, um wieviel sich der Strom während $t_{wait-prio}$ bzw. $t_{wait}$ ändert. Hierdurch erhält man ein Maß für die Ungenauigkeit, die durch das Verfahren nach der Erfindung in Kauf genommen werden muß.

**Patentansprüche**

1. PWM-Stromregelschaltung, umfassend mindestens zwei zur Ansteuerung der Lasten vorgesehene Treiberstufen (10) und eine oder mehrere Strommesseiririchtungen (3), insbesondere zur Durchführung des Verfahrens gemäß einem der Ansprüche 5 bis 10, **dadurch gekennzeichnet, dass** mindestens ein Multiplexer (4) zur Zuführung der den Laststrom betreffenden Strommesssignale in den Treiberstufen an eine oder mehre Strommesseinrichtungen vorgesehen ist, wobei der Multiplexer von einem oder mehreren Steuersignalen (30, 31) angesteuert wird, die durch eine Kontrolleinrichtung (5) erzeugt werden, und dass Anforderurigsleitungen (12) zur Übermittlung von Anforderungssignalen von den Treiberstufen (1) an die Kontrolleinrichtung (5) vorgesehen sind.

2. PWM-Stromregelschaltung nach Anspruch 1, **dadurch gekennzeichnet, dass** die Anzahl von Strommesseinrichtung (3) geringer ist, als die Anzahl der Treiberstufen.

3. PWM-Stromregelschaltung nach einem der Ansprüche 1 oder 2, **dadurch gekennzeichnet, dass** die Kontrolleinrichtung einen Speicher zur Speicherung der von den Anforderungssignalen ausgelösten Anforderungsereignissen umfasst.

4. PWM-Stromregelschaltung nach einem der Ansprüche 2 oder 3, **dadurch gekennzeichnet, dass** die Kontrolleinrichtung einen Demultiplexerausgang (34) zur Zuordnung des digitalen Ausgangs (33) des A/D-Wandters zu Stromspeicherstellen (32, 32') umfasst.

5. Verfahren zur Strommessung mit einer oder mehreren Strommesseinrichtungen (3) und zwei oder mehreren Treiberstufen (10), bei dem die in den Treiberstufen fließenden Ströme in jeder Treiberstufe gemessen werden und die Treiberstufen mittels individueller Steuersignale (14) zur Modulation der Pulsweite des in der Treiberstufefiiessenden Laststroms angesteuert werden, **dadurch gekennzeichnet,**
   **dass** der Zeitpunkt der Strommessungen durch eine organisierte zeitliche Abfolge gesteuert wird;
   **dass** die organisierte Zuordnung Strommessanforderungen, welche für einzelne Treiberstufen bestimmt sind, speichert und die Strommessungen auf Grund von Strommessanforderungen nach einer festgelegten oder durch Sortieren ermittelten Reihenfolge abarbeitet, und
**dass** Strommessanforderungen (15,24), welche den Treiberstufen zugeordnet sind, erzeugt werden und eine Strommessung auf Grund einer Anforderung erfolgt.

6. Verfahren nach Anspruch 5, **dadurch gekennzeichnet, dass** die Steuersignale der Treiberstufen eine gemeinsam Periode (27) aufweisen, wobei die Periode in mehrere Zeitscheiben (11) zerlegt wird und jede Zeitscheibe genau einer Treiberstufe (10) zugeordnet wird.

7. Verfahren nach einem der Ansprüche 5 oder 6, **dadurch gekennzeichnet, dass** eine Treiberstufe nur innerhalb, ins besondere am Anfang, ihrer zugeordneten Zeitscheibe ein geschaltet (13,18) wird.

8. Verfahren nach Anspruch 5 bis 7, **dadurch gekennzeichnet, dass** eine Strommessanforderung einer Treiberstufe innerhalb der der Treiberstufe zugeordneten Zeitscheibe zuerst bearbeitet wird.

9. Verfahren nach Anspruch 8, **dadurch gekennzeichnet, dass** eine Strommessanforderung einer Treiberstufe, welche nicht der momentan durchlaufenen Zeitscheibe zugeordnet ist, erst dann bearbeitet wird, wenn frühere Strommessanforderungen von solchen nicht zur Zeitscheibe gehörenden Treiberstufen bereits abgearbeitet sind.

10. Verfahren nach Anspruch 8, **dadurch gekennzeichnet, dass** eine Strommessanforderung einer Treiberstufe außerhalb der der Treiberstufe zugeordneten Zeitscheibe, die nicht sofort bearbeitet werden kann, in einem Speicher gespeichert wird und eine Bearbeitung der gespeicherten Anforderungen in einer Reihenfolge vorgenommen wird, welche den Zeitpunkt der Endflanke (37) der Ansteuerimpulse berücksichtigt.

11. Verwendung der PWM-Stromregelschaltung nach den Ansprüchen 1 bis 4 in Bremskraft-oder Fahrdynamikreglern für Kraftfahrzeuge.


**Claims**

1. PWM current control circuit arrangement comprising at least two driver stages (10) provided for actuation of the loads and one or more current measuring devices (3), in particular for implementing the method as claimed in any one of claims 5 to 10,
**characterized in that** at least one multiplexer (4) is provided to conduct current measurement signals relating to the load current in the driver stages to one or more current measuring devices, with the multiplexer being actuated by one or more control signals (30, 31) which are produced by a checking device (5), and **in that** request lines (12) are provided to send request signals from the driver stages (10) to the checking device (5).

2. PWM current control circuit arrangement as claimed in claim 1,
**characterized in that** the number of current measuring devices (3) is smaller than the number of the driver stages.

3. PWM current control circuit arrangement as claimed in claim 1 or 2,
**characterized in that** the checking device comprises a memory for storing request events initiated by the request signals.

4. PWM current control circuit arrangement as claimed in claim 2 or 3,
**characterized in that** the checking device comprises a de-multiplexer output (34) which allocates the digital output (33) of the A/D converter to current memory locations (32, 32').

5. Method for current measurement with one or more current measuring devices (3) and two or more driver stages (10), wherein the currents flowing in the driver stages are measured in each driver stage and the driver stages are actuated by means of individual control signals (14) for the modulation of the pulse width of the load current flowing in the driver stage,
**characterized in that** the moment of the current measurements is controlled by an organized chronological order; **in that** the organized allocation memorizes current measurement requests intended for individual driver stages, and processes the current measurements on account of current measurement requests according to a fixed order or an order determined by sorting, and
**in that** current measuring requests (15, 24) associated with the driver stages are produced, and current measurement takes place in response to a request.

**6.** Method as claimed in claim 5,
**characterized in that** the control signals of the driver stages have one joint period (27), with said period being subdivided into several time slices (11) and each time slice is associated precisely with one driver stage (10).

**7.** Method as claimed in any one of claims 5 or 6,
**characterized in that** a driver stage is enabled only within a time slice associated with it (13, 18), especially at the beginning of said time slice.

**8.** Method as claimed in any one of claims 5 to 7,
**characterized in that** a current measurement request of a driver stage is processed as first within the time slice associated with the driver stage.

**9.** Method as claimed in claim 8,
**characterized in that** a current measurement request of a driver stage, which is not allocated to the time slice that is instantaneously passed, is processed only when former current measurement requests of driver stages that do not belong to the time slice have already been processed.

**10.** Method as claimed in claim 8,
**characterized in that** a current measurement request of a driver stage outside the time slice associated with the driver stage that cannot be processed immediately is stored in a memory, and processing of the memorized requests is executed in a chronological order that takes into consideration the moment of the edge (37) of the actuating pulses.

**11.** Use of the PWM current control circuit arrangement as claimed in claims 1 to 4 in brake force controllers or driving dynamics controllers for automotive vehicles.

**Revendications**

**1.** Circuit de régulation de courant PWM, comprenant au moins deux étages excitateurs (10) prévus pour la commande des charges, et un ou plusieurs dispositifs de mesure de courant (3), en particulier pour la mise en oeuvre du procédé selon l'une quelconque des revendications 5 à 10, **caractérisé en ce qu'**il est prévu au moins un multiplexeur (4) pour amener les signaux de mesure de courant, concernant le courant de charge, dans les étages excitateurs, à un ou plusieurs dispositifs de mesure de courant, le multiplexeur étant commandé par un ou plusieurs signaux de commande (30, 31) qui sont produits par un dispositif de contrôle (5), et **en ce qu'**il est prévu des lignes de demande (12) pour transmettre des signaux de demande des étages excitateurs (1) au dispositif de contrôle (5).

**2.** Circuit de régulation de courant PWM selon la revendication 1, **caractérisé en ce que** le nombre de dispositifs de mesure de courant (3) est inférieur au nombre d'étages excitateurs.

**3.** Circuit de régulation de courant PWM selon la revendication; 1 ou 2 **caractérisé en ce que** le dispositif de contrôle comprend une mémoire pour mémoriser les événements de demande, déclenchés par les signaux de demande.

**4.** Circuit de régulation de courant PWM selon la revendication 2 ou 3 **caractérisé en ce que** le dispositif de contrôle comprend une sortie de démultiplexeur (34) pour attribuer la sortie numérique (33) du convertisseur analogique/numérique à des emplacements de mémoire de courant (32, 32').

**5.** Procédé de mesure de courant avec un ou plusieurs dispositifs de mesure de courant (3) et deux étages excitateurs (10) ou plus, dans lequel les courants circulant dans les étages excitateurs sont mesurés dans chaque étage excitateur et les étages excitateurs sont commandés, au moyen de signaux de commande individuels (14), en vue de la modulation de largeur d'impulsion du courant de charge circulant dans les étages excitateurs, **caractérisé en ce que** l'instant des mesures de courant est commandé par une séquence temporelle organisée ;
**en ce que** l'attribution organisée mémorise des demandes de mesure de courant, qui sont destinées à différents étages excitateurs, et traite les mesures de courant sur la base de demandes de mesure de courant, selon une succession définie ou déterminée par triage, et
**en ce que** sont produites des demandes de mesure de courant (15, 24), qui sont attribuées aux étages excitateurs, et une mesure de courant se produit sur la base d'une demande.

**6.** Procédé selon la revendication 5, **caractérisé en ce que** les signaux de commande des étages excitateurs présentent une période (27) commune, la période étant décomposée en plusieurs tranches de temps (11) et chaque tranche de temps étant attribuée précisément à un étage excitateur (10).

**7.** Procédé selon l'une quelconque des revendications 5 ou 6, **caractérisé en ce qu'**un étage excitateur n'est activé qu'à l'intérieur, en particulier au début, de la tranche de temps qui lui est attribuée.

**8.** Procédé selon l'une quelconque des revendications 5 à 7, **caractérisé en ce qu'**une demande de mesure de courant d'un étage excitateur est traité d'abord à l'intérieur de la tranche de temps attribuée à l'étage excitateur.

**9.** Procédé selon la revendication 8, **caractérisé en ce qu'**une demande de mesure de courant d'un étage excitateur, qui n'est pas attribué à la tranche de temps traversée à l'instant, n'est traitée que si des demandes antérieures de mesure de courant sont déjà traitées par des étages excitateurs n'appartenant pas à la tranche de temps.

**10.** Procédé selon la revendication 8, **caractérisé en ce qu'**une demande de mesure de courant d'un étage excitateur est mémorisée dans une mémoire, à l'extérieur de la tranche de temps attribuée à l'étage excitateur qui ne peut être traitée immédiatement, et il est procédé à un traitement des demandes mémorisées dans une succession qui tient compte de l'instant du flanc terminal (37) des impulsions de commande.

**11.** Utilisation du circuit de régulation de courant PWM selon les revendications 1 à 4 dans des régulateurs de force de freinage ou de dynamique de conduite pour véhicule automobile.

Fig. 1

Fig. 2

Fig. 3

Fig. 4

**EP 1 355 804 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3842921 A1
- DE 3842921
- DE 10041958 A1
- US 5079456 A
- DE 19520735 A1